# EUROPEAN PATENT APPLICATION

(11) **EP 4 583 193 A1**
(43) Date of publication of application: **09.07.2025**
(21) Application number: 23860891.3
(22) Date of filing: 30.08.2023
(51) Int. Cl.: H01M 4/139, H01M 4/04, H01M 4/62, H01M 10/052, H01M 4/02

(54) **ELECTRODE, METHOD FOR MANUFACTURING ELECTRODE, AND LITHIUM SECONDARY BATTERY COMPRISING ELECTRODE**

(30) Priority: 30.08.2022 KR 20220109522
(71) Applicant: LG Energy Solution, Ltd., Seoul 07335 (KR)
(72) Inventor: RYU, Ji Hoon, Daejeon 34122 (KR); KIM, Dong Kyu, Daejeon 34122 (KR); YOON, Yeo Min, Daejeon 34122 (KR); LIM, Tae Seob, Daejeon 34122 (KR)
(74) Representative: Goddar, Heinz J.
(86) International application number: PCT/KR2023/012923
(87) International publication number: WO 2024/049215

(57) **Abstract**

The present invention relates to an electrode including an electrode current collector, and an electrode active material layer disposed on at least one side of the electrode current collector, wherein the electrode active material layer includes an electrode active material and a gel polymer electrolyte, and the electrode has a rigidity of 2 kPa to 4 kPa. In addition, the present invention relates to a method for manufacturing an electrode, which includes applying an electrode slurry containing an electrolyte solution onto an electrode current collector, disposing an oxygen blocking member on the applied electrode slurry, and hot rolling the electrode slurry covered with the oxygen blocking member, wherein the electrolyte solution is heat cured through the hot rolling.

## Description

### TECHNICAL FIELD

### Cross-reference to Related Applications

This application claims the benefit of Korean Patent Application No. 10-2022-0109522, filed on August 30, 2022, in the Korean Intellectual Property Office, the disclosure of which is incorporated herein in its entirety by reference.

### Technical Field

The present invention relates to an electrode, a method for manufacturing the same, and a lithium secondary battery including the same.

### BACKGROUND ART

In recent years, there has been a dramatic increase in demand for batteries as energy sources with the technical development and increase in demand for Energy Storage System (ESS), and research on batteries capable of meeting various requirements has been conducted accordingly. In particular, research on a lithium secondary battery having a high energy density and also exhibiting excellent lifespan and cycle characteristics as a power source for such devices has been actively conducted.

Typically, lithium secondary batteries include a positive electrode, a negative electrode, a separator interposed between the positive electrode and the negative electrode, an electrolyte, and the like. As a typical electrolyte for the lithium secondary batteries, a liquid-state electrolyte in which lithium salts are dissolved in a non-aqueous organic solvent has been predominantly used. However, the use of such a liquid-state electrolyte causes a high chance of degrading electrode materials and volatilizing organic solvents, and also brings about concerns over combustion or explosion resulting from a rise in ambient temperature and temperature of the battery itself and leakage, thereby leading to low safety.

Lately, research on various materials or types of solid electrolytes has been actively pursued to overcome the safety concern of liquid electrolytes. In particular, a gel electrolyte provides excellent stability and processability, and also has its own gel-phase adhesive strength to provide benefits such as excellent interfacial stability between an electrode and an electrolyte.

Meanwhile, the gel electrolyte may be produced by gelling (crosslinking) a composition in which a lithium salt, a solvent, a polymerizable monomer, and an initiator are mixed at an appropriate temperature in a reasonable amount of time. In this case, when the electrolyte is gelled in an oxygen environment, the gel electrolyte is not completely cured. In addition, it takes a considerable amount of time for the gel electrolyte to be impregnated into the electrode. Accordingly, the gel electrolyte may volatilize or contact other electrodes to be separated during a process of manufacturing cells. When the electrolyte is gelled in a space where an oxygen-free environment is set (e.g., a glove box) to prevent the above issues from taking place, large electrode laminates are hardly manufacturable due to the limitation in size of the space.

Accordingly, there is a need to develop technology for a method for manufacturing large-area solid-state batteries by completely impregnating and curing the gel electrolyte even in an oxygen environment.

### DISCLOSURE OF THE INVENTION

### TECHNICAL PROBLEM

An aspect of the present invention provides an electrode including an electrode active material layer containing a gel polymer electrolyte, and having excellent capacity manifestation and lifespan performance.

Another aspect of the present invention provides a method for manufacturing an electrode having high capacity manifestation and excellent electrode rigidity by improving the issue of a gel polymer electrolyte subjected to electrode impregnation and curing in an oxygen environment.

### TECHNICAL SOLUTION

According to an aspect of the present invention, there is provided an electrode including an electrode current collector, and an electrode active material layer disposed on at least one side of the electrode current collector, wherein the electrode active material layer includes an electrode active material and a gel polymer electrolyte, and the electrode has a rigidity of 2 kPa to 4 kPa.

According to another aspect of the present invention, there is provided a method for manufacturing an electrode, which includes applying an electrode slurry containing an electrolyte solution onto an electrode current collector, disposing an oxygen blocking member on the applied electrode slurry, and hot rolling the electrode slurry covered with the oxygen blocking member, wherein the electrolyte solution is heat cured through the hot rolling.

According to another aspect of the present invention, there is provided a lithium secondary battery including the electrode described above.

### ADVANTAGEOUS EFFECTS

An electrode according to the present invention includes an electrode active material layer in which a gel polymer electrolyte is composited, and thus the electrode rigidity thereof satisfies a specific range. The electrode according to the present invention contains a gel polymer electrolyte impregnated inside the electrode active material layer, and may thus have excellent capacity manifestation and high rigidity, and accordingly, a lithium secondary battery having improved output, safety, and lifespan performance all at once is achievable.

In addition, according to a method for manufacturing an electrode according to the present invention, unlike typical techniques in which impregnating an electrolyte comes after manufacturing an electrode, a gel electrolyte is gelled in a condition that an electrode slurry and an electrolyte solution are mixed from the beginning, and thus the electrolyte may have improved electrode impregnation properties. Accordingly, lithium precipitation and electrolyte volatilization resulting from non-impregnation of an electrolyte may not be caused and highly volatile electrolyte solutions may become applicable to allow a greater range of options for the electrolyte solutions. In addition, the electrolyte may be cured in the process of manufacturing an electrode, and thus electrolyte solution injection and aging after cell assembly may not be required, thereby shortening the amount of time for cell manufacturing. In addition, according to the method for manufacturing an electrode of the present invention, an electrolyte solution is cured by blocking contact between the electrolyte solution and oxygen with the use of an oxygen blocking member, and thus a gel electrolyte may be completely cured even in an oxygen environment. Accordingly, the gel electrolyte may be prevented from volatilizing or contacting other electrodes to be separated during the process of manufacturing cells. In addition, electrolyte solution gelation and electrode manufacturing are available even in an oxygen environment, making mass production of electrodes achievable through a roll-to-roll process. The electrolyte solution is not required to be gelled in a space such as a glove box in which an oxygen-free environment is set, and thus manufacturing a large-area electrode is achievable. Meanwhile, in the present invention, the electrolyte solution contained in an electrode slurry is crosslinked through a thermal crosslinking method instead of a UV crosslinking method, and thus the electrolyte solution may be uniformly cured deep inside the electrode where UV penetration is hard. Accordingly, even when a separate liquid electrolyte solution is not injected into an electrode laminate or an electrode loading thickness is not formed to be thin when manufacturing a lithium secondary battery, gelation may take place uniformly throughout the electrode, and thus the lithium secondary battery may have improved capacity, output, and lifespan.

### BRIEF DESCRIPTION OF THE DRAWINGS

FIG. 1 is a schematic cross-sectional view for a detailed description of an electrode according to the present invention;
FIG. 2 is a graph measuring the adhesion of an active material layer to a current collector in negative electrodes respectively prepared in Examples 1 to 3 and Comparative Examples 1 to 4; and
FIG. 3 is a graph showing capacity retention according to the number of cycles after lithium secondary batteries manufactured in Examples 1 to 3 and Comparative Examples 1 to 4 are driven at 45 °C.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals denote like elements throughout specification.

Unless otherwise defined, all terms (including technical and scientific terms) used herein have the same meaning as commonly understood by one of ordinary skill in the art to which the present invention belongs. Terms as defined in a generally used dictionary are not construed ideally or excessively unless defined apparently and specifically.

Terms used herein are not for limiting the inventive concept but for describing the embodiments. As used herein, the singular forms include the plural forms as well, unless the context clearly indicates otherwise. The meaning of "comprises" and/or "comprising" used in the specification does not exclude the presence or addition of other components besides a mentioned component.

In this specification, when an element "includes" a component, it may indicate that the element does not exclude another component unless explicitly described to the contrary, but may further include another component.

In this specification, the description "A and/or B" refers to A or B, or A and B.

As used herein, "%" refers to wt% unless indicated otherwise.

As used herein, viscosity may be measured using a viscosity meter, specifically, using a Brookfield viscometer (DV-II + PRO Viscometer, Brookfield) as a viscosity meter, at 25 °C, a relative humidity (RH) of 50%, and a frequency of 30 Hz.

### <Electrode>

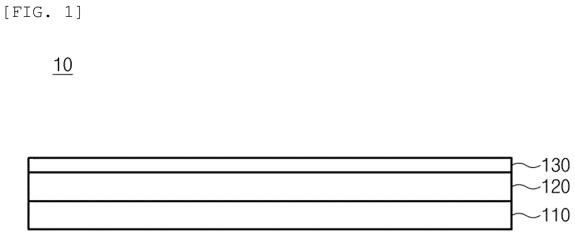

Hereinafter, an electrode according to the present invention will be described in detail with reference to FIG. 1. FIG. 1 is a schematic cross-sectional view for specifically describing an electrode according to the present invention.

To be specific, an electrode 10 according to the present invention includes an electrode current collector 110, and an electrode active material layer 120 disposed on at least one side of the electrode current collector, and the electrode active material layer 120 includes an electrode active material and a gel polymer electrolyte, and the electrode has a rigidity of 2 kPa to 4 kPa.

Conventionally, a lithium secondary battery containing a gel polymer electrolyte is manufactured in the way that an electrode assembly including an electrode and a separator is stored in a battery case, and then a composition for forming a gel polymer electrolyte (electrolyte solution) containing a crosslinkable material is injected into the battery case and cured. As for the lithium secondary battery manufactured through the above said method, the desired electrode rigidity was hardly achieved due to the presence of unreacted crosslinkable materials, and it was hard to achieve a life performance and an output performance at desired level because sufficiently impregnating the formed gel polymer electrolyte into the electrode to improve lithium mobility was difficult.

To deal with the issues above, the electrode active material layer 120 according to the present invention having the gel polymer electrolyte according to the present invention composited therein was used, and the electrode rigidity was set to a specific range, and impregnation and complexation with the gel polymer electrolyte were used to improve lithium mobility in the electrode, thereby benefiting capacity, output, and lifespan performance.

### Electrode current collector (110)

The electrode current collector is not particularly limited as long as it has conductivity without causing chemical changes in batteries. To be specific, the electrode current collector may include at least one selected from the group consisting of copper, stainless steel, aluminum, nickel, titanium, fired carbon, and an aluminum-cadmium alloy. For example, when the electrode is a positive electrode, the electrode current collector may include aluminum, and when the electrode is a negative electrode, the electrode current collector may include copper.

For example, the electrode current collector may be used in various forms such as a film, a sheet, a foil, a net, a mesh, a porous body, a foam body, and a non-woven fabric body. To be specific, the electrode current collector may include a polymer layer and a metal layer disposed on both sides of the polymer layer, and the metal layer may include at least one selected from the group consisting of copper, stainless steel, aluminum, nickel, titanium, fired carbon, and an aluminum-cadmium alloy.

### Electrode active material layer (120)

The electrode active material layer 120 may be disposed on at least one side of the electrode current collector. Specifically, the electrode active material layer 120 may be disposed on one side or both sides of the electrode current collector.

The electrode active material layer 120 includes an electrode active material and a gel polymer electrolyte. Specifically, the electrode active material layer 120 may be a gel polymer electrolyte composite electrode active material layer in which an electrode active material and a gel polymer electrolyte are composited. Specifically, the gel polymer electrolyte may be impregnated in the electrode active material layer 120. The gel polymer electrolyte may be disposed inside the electrode active material layer 120 or inside and on a surface of the electrode active material layer 120.

The gel polymer electrolyte may be a cured product of an electrolyte solution containing a crosslinkable material, a lithium salt, and an organic solvent. The electrolyte solution may be a composition for forming a gel polymer electrolyte. The electrolyte solution may further include an initiator.

The crosslinkable material may include at least one selected from crosslinkable monomers (hereinafter referred to as 'monomers') and crosslinkable oligomers (hereinafter referred to as 'oligomers').

The monomers and/or oligomers are materials that may form a gel polymer electrolyte through a polymerization reaction.

The monomers may be selected from the group consisting of ethyleneglycol diacrylate, triethylene glycol diacrylate, ethoxylated trimethylolpropane triacrylate (ETPTA), bisphenol A ethoxylated dimethacrylate, acrylic acid, carboxyethyl acrylate, methyl cyanoacrylate, ethyl cyanoacrylate, ethyl cyano ethoxyacrylate, cyano acrylic acid, hydroxyethyl methacrylate, hydroxypropyl acrylate, a derivative thereof, or a combination thereof, but is not limited thereto.

The oligomers may include at least one selected from the group consisting of a polyether-based oligomer, a polycarbonate-based oligomer, an acrylate-based oligomer, a polysiloxane-based oligomer, a phosphazene-based oligomer, a polyethylene-based oligomer, a urethane-based oligomer, an epoxy-based oligomer, a fluorine-based oligomer, polyethylene oxide, polyester sulfide, polyvinyl alcohol, and polyvinylidene fluoride. Specifically, the oligomers may include at least one selected from fluorine-based oligomers, polycarbonate-based oligomers, and polysiloxane-based oligomers.

The monomers and/or oligomers may be included in an amount of 4 to 40 parts by weight, specifically 5 to 40 parts by weight, more specifically 5 to 30 parts by weight with respect to 100 parts by weight of the electrolyte solution. When the monomers and/or oligomers are present in an amount of less than 4 parts by weight with respect to 100 parts by weight of the electrolyte solution, the adhesion between the current collector and the electrode active material layer is reduced due to an insufficient crosslinking reaction between monomers and/or oligomers. In addition, when the monomers and/or oligomers are present in an amount of greater than 40 parts by weight with respect to 100 parts by weight of the electrolyte solution, electrode resistance rises.

The lithium salt is used as a medium for transporting ions in lithium secondary batteries.

The lithium salt is a material that is readily soluble in the gel polymer electrolyte, and may for example include a single substance or a mixture of two or more substances selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, LiFSI, LiTFSI, LiB(CO₂O₄)₂, lithium chloroborane, lower aliphatic carboxylic acid lithium, 4-phenyl boric acid lithium, and lithium imide, but is not limited thereto.

The lithium salt may have a concentration of 0.1 M to 5.0 M, preferably 0.1 M to 3.0 M, more preferably 0.2 M to 3.0 M in the electrolyte solution. When the lithium salt is included in the amount range described above, the cured electrolyte solution may have sufficient ionic conductivity.

The organic solvent is for dissolving the monomers and/or oligomers, the initiator, and the lithium salt described above.

The organic solvent is the one commonly used in secondary batteries, and for example, ether, ester (acetate, propionate), amide, linear carbonate or cyclic carbonate, nitrile (acetonitrile, SN, and the like) may be used alone or two or more therefrom may be mixed and used in combination.

In particular, typically, a carbonate-based solvent including a carbonate compound that is cyclic carbonate, linear carbonate, or a mixture thereof may be used.

Specific examples of the cyclic carbonate compound include a single compound or a mixture of at least two compounds selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and halogenates thereof. In addition, as specific examples of the linear carbonate compounds, a single compound or a mixture of at least two compounds selected from the group consisting of dimethyl carbonate (DMC), diethyl carbonate (DEC), dipropyl carbonate (DPC), ethylmethyl carbonate (EMC), methylpropyl carbonate (MPC), and ethylpropyl carbonate (EPC) may typically be used, but the embodiment of the present invention is not limited thereto.

In particular, among the carbonate-based solvents, propylene carbonate and ethylene carbonate, which are cyclic carbonates, are preferably used because they are high-viscosity organic solvents and have high permittivity, thereby satisfactorily dissociating a lithium salt in an electrolyte solution, and when such cyclic carbonates are mixed with a low-viscosity, low-permittivity linear carbonate, such as ethylmethyl carbonate, diethyl carbonate, or dimethyl carbonate, in an appropriate ratio and used, an electrolyte solution having high electrical conductivity may be prepared, and therefore, such mixtures are more preferably used.

In addition, as esters in the organic solvent, a single compound or a mixture of at least two selected from the group consisting of methyl acetate, ethyl acetate, propyl acetate, methyl propionate, ethyl propionate, γ-butyrolactone, γ-valerolactone, γ-caprolactone, α-valerolactone, and ε-caprolactone may be used, but the embodiment of the present invention is not limited thereto.

The initiator is a material for forming active radicals and thus causing a polymerization reaction of monomers and/or oligomers. Specifically, the initiator may be decomposed by light such as UV at room temperature (5 °C to 30 °C), or decomposed by heat at 30 °C to 100 °C to form radicals, thereby initiating a free radical polymerization reaction of monomers and/or oligomers.

The initiator may be a heat curing initiator. For example, the initiator may include at least one selected from the group consisting of benzoyl peroxide, acetyl peroxide, dilauryl peroxide, di-tert-butyl peroxide, t-butyl peroxy-2-ethyl-hexanoate, cumyl hydroperoxide and hydrogen peroxide, 2,2'-azobis(2-cyanobutane), 2,2'-azobis(methylbutyronitrile), 2,2'-azobis(iso-butyronitrile) (AIBN), and 2,2'-azobisdimethyl-valeronitrile (AMVN).

The initiator may be included in an amount of 0.01 wt% to 10 wt%, specifically 0.05 wt% to 7 wt%, more specifically 0.06 wt% to 5 wt% with respect to 100 parts by weight of monomers and/or oligomers. When the initiator is included in the amount range described above, an active cross-linking reaction between monomers and/or oligomers may take place to obtain adhesion between the current collector and the electrode active material layer, and the polymerization rate may be controlled in the electrolyte solution, thereby preventing unreacted initiators from remaining and adversely affecting battery performance.

The electrode 10 has an electrode rigidity of 2 kPa to 4 kPa. When the electrode rigidity of the electrode 10 is in the above range, it may be understood that the electrode active material layer 120 is sufficiently impregnated with the gel polymer electrolyte. When the electrode rigidity of the electrode 10 is less than 2 kPa, it may be assessed that impregnation of the electrode active material layer 120 with the gel polymer electrolyte is insufficient, or unreacted or uncured crosslinkable materials (crosslinkable monomers, crosslinkable oligomers, and the like) are present at a level greater than needed, and in this case, reduced lithium mobility, failures in capacity manifestation and generation of side reaction gases, and the like may be caused. When the electrode rigidity of the electrode 10 is greater than 4 kPa, the resistance becomes too high, and thus the desired output performance and lifespan performance may not be achievable, and the electrode itself has reduced brittleness, causing generation of foreign substances due to breakage of the edge of the electrode and the resulting internal short circuit.

The electrode rigidity may be measured using a universal testing machine (UTM). Specifically, the electrode rigidity may refer to the maximum rigidity measured by fastening an electrode to an aluminum (Al) jig having a hole of 5 cm in diameter and then pressing the electrode with a metal rod of 2 cm in diameter using UTM equipment. The electrode rigidity is measured by pressing the electrode with the metal rod, and thus is not significantly affected by the area, thickness, loading amount, and the like of the electrode.

The method of achieving the above electrode rigidity range is not particularly limited, and for example, using a mixture of an electrode active material and an electrolyte solution (composition for forming a gel polymer electrolyte) as an electrode slurry used when manufacturing an electrode active material layer; replacing a binder in the electrode slurry with a gel polymer electrolyte, manufacturing an electrode active material layer through a hot rolling method using an oxygen blocking member, and using a method for manufacturing an electrode, which will be described later may be applicable.

The electrode may be a positive electrode or a negative electrode.

When the electrode is a positive electrode, the electrode active material layer may be a positive electrode active material layer, and the electrode active material may be a positive electrode active material.

Lithium transition metal oxide may be used as the positive electrode active material, and may be used without limitation as long as the intercalation and deintercalation of lithium ions are easily allowed during charging and discharging, and for example, the positive electrode active material may be at least one selected from lithium nickel cobalt-based composite oxide, lithium manganese-based composite oxide, and lithium iron phosphate-based composite oxide.

To be specific, the positive electrode active material may include the lithium nickel cobalt-based composite oxide represented by Formula 1 below.

[Formula 1] Li₁₊ₓ(NiₐCo_{b}Mn_{c}M_{d})O₂

In Formula 1 above,
M is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
1+x, a, b, c, and d are each a molar ratio of independent elements, and
-0.2≤x≤0.2, 0.60≤a<1, 0<b≤0.30, 0<c≤0.30, 0≤d≤0.10, a+b+c+d=1 are satisfied.

1+x above indicates a molar ratio of lithium in the lithium nickel cobalt-based composite oxide, and may satisfy -0.1≤x≤0.2, or 0≤x≤0.2. When the molar ratio of lithium satisfies the above range, the lithium nickel cobalt-based composite oxide may have a stably formed crystal structure.
a above indicates a molar ratio of nickel to all metals excluding lithium in the lithium nickel cobalt-based composite oxide, and may satisfy 0.70≤a<1, 0.75≤a<1, or 0.80≤a<1. When the molar ratio of nickel satisfies the above range, high energy density is shown, and thus high capacity is achievable.
b above indicates a molar ratio of cobalt to all metals excluding lithium in the lithium nickel cobalt-based composite oxide, and may satisfy 0<b≤0.20, 0<b≤0.15, or 0<b≤0.10. When the molar ratio of cobalt satisfies the above range, good resistance characteristics and output characteristics may be achievable.
c above indicates a molar ratio of manganese to all metals excluding lithium in the lithium nickel cobalt-based composite oxide, and may satisfy 0<c≤0.20, 0<c≤0.15, or 0<c≤0.10. When the molar ratio of manganese satisfies the above range, the positive electrode active material may show excellent structural stability.

In an embodiment of the present invention, the lithium nickel cobalt-based composite oxide may include at least one doping element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and may preferably include Al as the doping element. That is, the d, which indicates a molar ratio of the doping element to all metals excluding lithium in the lithium composite transition metal oxide, may satisfy 0<d≤0.10, 0<d≤0.08, or 0<d≤0.05.

Preferably, a, b, c, and d may each satisfy 0.70≤a<1, 0<b≤0.2, 0<c≤0.2, and 0≤d≤0.1.

The lithium manganese-based composite oxide may be at least one selected from the group consisting of LiₚMn_{1-q}M_{q}A₂, LiₚMn₂O₄₋ᵣXᵣ, LiₚMn_{2-q}M_{q}M'ᵣA₄, LiₚCo_{1-q}M_{q}A₂, LiₚCo_{1-q}M_{q}O₂₋ᵣXᵣ, LiₚNi_{1-q}M_{q}O₂₋ᵣXᵣ, LiₚNi_{1-q}Co_{q}O₂₋ᵣXᵣ, LiₚNi_{1-q-r}CO_{q}MᵣA_{w}, LiₚNi_{1-q-r}Co_{q}MᵣO_{2-w}X_{w}, LiₚNi_{1-q-r}Mn_{q}MᵣA_{w}, and LiₚNi_{1-q-r}Mn_{q}MᵣO_{2-w}X_{w}, and in this case, p, q, r, and w each satisfy 0.9≤p≤1.2, 0≤q≤1, 0≤r≤1, and 0≤w≤2, M and M' are the same or different and at least one element selected from the group consisting of Mg, Al, Co, K, Na, Ca, Si, Ti, Sn, V, Ge, Ga, B, As, Zr, Mn, Cr, Fe, Sr, V, and a rare earth element, A is at least one element selected from the group consisting of O, F, S, and P, and X is at least one element selected from the group consisting of F, S, and P.

The lithium iron phosphate-based composite oxide may be represented by Formula 2 below.

[Formula 2] LiFe₁₋ₓMₓPO₄

In Formula 2 above,
M is at least one selected from Ni, Co, Mn, Al, Mg, Y, Zn, In, Ru, Sn, Sb, Ti, Te, Nb, Mo, Cr, Zr, W, Ir, and V, and satisfies 0≤ x<1.

The positive electrode active material layer may include the positive electrode active material in an amount of 80 wt% to 99 wt%, specifically 90 wt% to 99 wt%.

The positive electrode active material layer may further include a conductive material.

In addition, the conductive material is a material that provides conductivity without causing chemical changes in batteries, and may be added in an amount of 0.5 wt% to 20 wt% in the positive electrode active material layer.

For example, the conductive material may be selected from a conductive material, such as: carbon black such as acetylene black, Ketjen black, channel black, furnace black, lamp black, and thermal black; graphite powder such as natural graphite, artificial graphite, carbon nanotubes, and graphite; conductive fibers such as carbon fibers and metal fibers; conductive powder such as carbon fluoride powder, aluminum powder, and nickel powder; conductive whiskers such as zinc oxide and potassium titanate; conductive metal oxides such as titanium oxide; and polyphenylene derivatives.

The positive electrode active material layer may further include a binder.

The binder is a component that assists in binding between an active material and a conductive material and in binding with a collector, and may be commonly added in an amount of 1 wt% to 30 wt% in a positive electrode active material layer. Examples of such binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, or various copolymers thereof.

When the electrode 10 is a positive electrode, the electrode may have an electrode rigidity of 2 kPa to 4 kPa, specifically 2.5 kPa to 3.5 kPa, more specifically 2.75 kPa to 3.25 kPa, even more specifically 2.75 kPa to 2.85 kPa.

When the electrode is a negative electrode, the electrode active material layer may be a negative electrode active material layer, and the electrode active material may be a negative electrode active material.

The negative electrode active material may include at least one selected from the group consisting of a carbon-based material capable of reversibly intercalating/deintercalating lithium ions, metals or alloys of lithium and these metals, a metal composite oxide, a material which may be doped and undoped with lithium, a lithium metal, and a transition metal oxide, and may preferably be a carbon material.

As the carbon-based material capable of reversibly intercalating/deintercalating lithium ions, any carbon material may be used without particular limitation so long as it is a carbon-based negative electrode active material generally used in a lithium ion secondary battery, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature fired carbon), hard carbon, mesophase pitch carbide, fired cokes, and the like.

As the metals or alloys of these metals and lithium, metals selected from the group consisting of Cu, Ni, Na, K, Rb, Cs, Fr, Be, Mg, Ca, Sr, Si, Sb, Pb, In, Zn, Ba, Ra, Ge, Al, and Sn or alloys of these metals and lithium may be used.

As the metal composite oxide, at least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me: Mn, Fe, Pb, Ge; Me': Al, B, P, Si, Groups 1, 2, and 3 elements of the periodic table, or halogen; 0<x≤1; 1≤y≤3; 1≤z≤8) may be used.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO2, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

Examples of the transition metal oxide may include lithium-containing titanium composite oxide (LTO), vanadium oxide, and lithium vanadium oxide.

The negative electrode active material may be included in an amount of 80 wt% to 99 wt% in the negative electrode active material layer.

The negative electrode active material layer may further include a conductive material.

In addition, the conductive material is a material that provides conductivity without causing chemical changes in batteries, and may be added in an amount of 0.5 wt% to 20 wt% in the negative electrode active material layer.

For example, the conductive material may be selected from a conductive material, such as: carbon black such as acetylene black, Ketjen black, channel black, furnace black, lamp black, and thermal black; graphite powder such as natural graphite, artificial graphite, carbon nanotubes, and graphite; conductive fibers such as carbon fibers and metal fibers; conductive powder such as carbon fluoride powder, aluminum powder, and nickel powder; conductive whiskers such as zinc oxide and potassium titanate; conductive metal oxides such as titanium oxide; and polyphenylene derivatives.

The negative electrode active material layer may further include a binder.

The binder is a component that assists in binding between an active material and a conductive material and in binding with a collector, and may be commonly added in an amount of 1 wt% to 30 wt% in the negative electrode active material layer. Examples of such binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, or various copolymers thereof.

When the electrode 10 is a negative electrode, the electrode may have an electrode rigidity of 2 kPa to 4 kPa, specifically 2 kPa to 3 kPa, more specifically 2.1 kPa to 2.7 kPa.

In the present invention, the electrode active material layer (positive electrode active material layer or negative electrode active material layer) may not include a binder. As described above, the electrode active material layer of the present invention includes a cured product of a gel polymer electrolyte or an electrolyte solution (composition for forming a gel polymer electrolyte), and this gel polymer electrolyte may replace the binder. Given that the rigidity of the electrode active material layer may excessively rise or serve as an unfavorable factor in resistance depending on the binder used, the gel polymer electrolyte may serve to bind the electrode active material and/or the electrode current collector and also improve lithium mobility performance.

The electrode 110 or the electrode active material layer 120 may have a thickness of 50 µm to 1,000 µm, specifically 50 µm to 500 µm, more specifically 50 µm to 300 µm.

In the present invention, the electrode 10 may further include a coating layer 130. The coating layer 130 may be disposed on a surface of the electrode 10, specifically, on a side opposite to a side where the electrode active material layer 120 faces the electrode current collector 110.

The coating layer 130 may include a gel polymer electrolyte. Specifically, the coating layer 130 may be formed of only a gel polymer electrolyte.

The gel polymer electrolyte included in the coating layer 130 may be the same as the gel polymer electrolyte included in the electrode active material layer 120.

The gel polymer electrolyte included in the coating layer 130 may indicate the gel polymer electrolyte formed on the surface of the electrode active material layer when the gel polymer electrolyte included in the electrode active material layer is formed.

### <Method for manufacturing electrode>

In addition, the present invention provides a method for manufacturing an electrode. The method for manufacturing an electrode may be the method for manufacturing an electrode described above.

The method for manufacturing an electrode according to the present invention includes applying an electrode slurry containing an electrolyte solution onto an electrode current collector, disposing an oxygen blocking member on the applied electrode slurry, and hot rolling the electrode slurry covered with the oxygen blocking member, and the electrolyte solution is heat cured through the hot rolling. In this case, the electrode manufactured through the method described above may be a positive electrode or a negative electrode.

According to the present invention, unlike typical techniques in which impregnating an electrolyte comes after manufacturing an electrode, a gel electrolyte is gelled in a condition that an electrode slurry and an electrolyte solution are mixed from the beginning, and thus the electrolyte may have improved electrode impregnation properties. Accordingly, lithium precipitation and electrolyte volatilization resulting from non-impregnation of an electrolyte may not be caused and highly volatile electrolyte solutions may become applicable to allow a greater range of options for the electrolyte solutions. In addition, the electrolyte may be cured in the process of manufacturing an electrode, and thus electrolyte solution injection and aging after cell assembly may not be required, thereby shortening the amount of time for cell manufacturing.

According to the present invention, an electrolyte solution is cured by blocking contact between the electrolyte solution and oxygen with the use of an oxygen blocking member, and thus a gel electrolyte may be completely cured even in an oxygen environment. Accordingly, the gel electrolyte may be prevented from volatilizing or contacting other electrodes to be separated during a process of manufacturing cells. In addition, electrolyte solution gelation and electrode manufacturing are available even in an oxygen environment, making mass production of electrodes achievable through a roll-to-roll process. The electrolyte is not required to be gelled in a space such as a glove box in which an oxygen-free environment is set, and thus manufacturing a large-area electrode is achievable.

Meanwhile, in the present invention, the electrolyte solution contained in an electrode slurry is crosslinked through a thermal crosslinking method instead of a UV crosslinking method. Accordingly, the electrolyte solution may be uniformly cured deep inside the electrode where UV penetration is hard. Accordingly, even when a separate liquid electrolyte solution is not injected into an electrode laminate or an electrode loading thickness is not formed to be thin when manufacturing a lithium secondary battery, gelation may take place uniformly throughout the electrode, and thus the lithium secondary battery may have improved capacity, output, and lifespan.

### (1) Applying electrode slurry containing electrolyte solution on electrode current collector

First, the method for manufacturing an electrode of the present invention is initiated by applying an electrode slurry onto an electrode current collector.

The applied electrode slurry may form an electrode active material layer through a hot rolling process, which will be described later. The rolling is hot rolling and is performed in the presence of an oxygen blocking member, and thus a gel polymer electrolyte having a high curing rate without any remaining unreacted crosslinkable substances may be present in the electrode active material layer. The electrode active material layer prepared therefrom has an electrode rigidity at an appropriate level, and thus a lithium secondary battery having excellent rigidity and improved capacity manifestation performance, output performance, and lifespan performance is achievable.

The electrode current collector is described above.

Then, the electrode slurry of the present invention includes an electrolyte solution. In this case, the electrolyte solution may be a composition for forming a gel polymer electrolyte. Specifically, the electrolyte solution may include a crosslinkable material, a lithium salt, and an organic solvent. The electrolyte solution may further include an initiator. Detailed descriptions of the electrolyte solution, the crosslinkable material, the lithium salt, the organic solvent, and the initiator are described above.

The electrode slurry may further include an electrode active material. The electrode active material may be a positive electrode active material or a negative electrode active material. Additionally, the electrode slurry may further include a conductive material and/or a binder. Descriptions of the electrode active material, the conductive material, and the binder are the same as described above.

Meanwhile, the electrode slurry of the present invention may not include a binder. In this case, the binder is a typical binder used in the typical electrode manufacturing, and refers to a material such as polyvinylidene fluoride (PVDF).

Instead of the binder, the electrolyte polymer heat-cured in the electrode of the present invention may serve to support the bonding of the active material and the conductive material and the bonding to the current collector. The electrode slurry includes no binder, and thus the electrode resistance is relatively reduced.

The electrode slurry of the present invention may not include any solvent other than the organic solvent of the electrolyte solution. Specifically, the electrode slurry may not include N-methyl-2-pyrrolidone (NMP). Typically, an electrode active material layer was formed from an electrode slurry and then impregnated with an electrolyte solution to manufacture an electrode. In this case, in the process of preparing the electrode active material layer, separate drying and rolling processes are performed to remove the N-methyl-2-pyrrolidone (NMP) solvent contained in the electrode slurry, and in particular, upon the rolling process, the active material is damaged, thereby reducing battery service life. However, the present invention uses a mixture of the active material and the conductive material in the electrolyte solution instead of impregnating the electrode active material layer with the electrolyte solution, and thus the drying and rolling processes for forming the active material layer are skipped, thereby minimizing damage to the active material.

The electrode slurry may have a solid content of 30% to 80%, specifically 40% to 80%, more specifically 50% to 80%. When the solid content of the electrolyte solution satisfies the above numerical range, the cured electrolyte solution is included in an appropriate amount in the electrode, thereby improving electrode processability and optimizing battery performance.

In addition, when the solid content of the electrolyte solution satisfies the above numerical range, the electrode slurry may have a viscosity that may be applicable on the electrode current collector. For example, the electrode slurry may have a viscosity of 20,000 cP or less, specifically 3,000 cP to 15,000 cP, more specifically 4,000 cP to 12,000 cP at 25°C.

As a mixing method for the electrode slurry containing the electrolyte solution, typical mixing methods may be used. For example, mixing may be performed by stirring the electrode slurry containing the electrolyte solution, using a homogenizer.

As a coating method for the electrode slurry containing the electrolyte solution, typical coating methods may be used. Bar coating, spin coating, roll coating, slot die coating, hand coating, spray coating, and the like may be used, and one method or a combination of two or more methods therefrom may be used.

### (2) Disposing oxygen blocking member on applied electrode slurry

Then, an oxygen blocking member is disposed on the applied electrode slurry. The electrode slurry may be covered with the oxygen blocking member, thus contact between the electrolyte solution included in the electrode slurry and oxygen may be blocked. In addition, when there is no oxygen blocking member on the electrode slurry, the electrode slurry remains on the rolled member upon rolling of the electrode slurry to reduce processability and cause inconsistency in the thickness and loading amount of the produced electrode.

The oxygen blocking member may be insoluble in a solvent in order to effectively block the contact between the electrolyte solution and oxygen. Specifically, the oxygen blocking member may be insoluble in an organic solvent. In addition, the oxygen blocking member may include a material having flexibility to be wound on a roll together with the electrode.

For example, the oxygen blocking member may include at least one selected from the group consisting of polypropylene (PP), and high density polyethylene (HDPE), but is not limited thereto.

The oxygen blocking member may have a thickness of 20 µm to 2000 µm, specifically 50 µm to 500 µm, more specifically 50 µm to 200 µm. When the thickness of the oxygen blocking member satisfies the numerical range described above, contact between the electrolyte solution and oxygen is blocked, and accordingly, the electrolyte solution may completely be cured.

### (3) Hot rolling electrode slurry covered with oxygen blocking member

Then, the electrode slurry covered with the oxygen blocking member is hot rolled. In this case, the electrolyte solution contained in the electrode slurry is heat cured through the hot rolling.

The heat curing of the electrolyte solution may be performed by applying heat to the electrolyte solution covered with the oxygen blocking member to crosslink crosslinkable materials (monomers and/or oligomers) contained in the electrolyte solution. The electrolyte solution is cured while the contact between the electrolyte solution and oxygen is blocked by the oxygen blocking member, and accordingly, the electrolyte solution may be prevented from volatilizing or contacting other electrodes to be separated.

According to the present invention, the hot rolling may include rolling the electrode slurry with a press roller. The electrode slurry may be hot rolled using the press roller to heat cure the electrolyte solution contained in the electrode slurry.

The press roller may have a surface temperature of 30 °C to 80 °C, specifically 40 °C to 80 °C, more specifically 50 °C to 70 °C. When the surface temperature of the press roller satisfies the above numerical range, temperature conditions in which the electrolyte solution may be crosslinked without damaging the oxygen blocking member may be achieved.

According to the present invention, a gap between the press roller and the electrode slurry may be regulated to control the electrode loading thickness. The capacity of a lithium secondary battery including an electrode manufactured according to the present invention may be controlled through the electrode loading thickness control.

After the hot rolling, the electrolyte solution impregnated in the electrode and the electrolyte solution present on a surface of the electrode may be cured. In this case, the electrolyte solution present on the surface of the electrode may be cured through the hot rolling to form an electrolyte layer (e.g., the coating layer 130 in FIG. 1) on the electrode.

The electrolyte layer may include a polymer matrix formed by crosslinking monomers and/or oligomers and an initiator, and a lithium salt impregnated into the polymer matrix. In this case, the electrolyte layer contains the lithium salt and may thus have ionic conductivity.

The degree of curing of the electrolyte layer may be 93% to 100%, specifically 95% to 100%, more specifically 98% to 100%. When the degree of curing of the electrolyte layer satisfies the above range, the electrolyte layer may be formed to have a uniform thickness on the active material layer, and the issue of the electrolyte layer being separated from the active material layer may be prevented.

The electrolyte layer may have a thickness of 1 µm to 200 µm, specifically 5 µm to 150 µm, more specifically 5 µm to 80 µm. When the thickness of the electrolyte layer satisfies the numerical range described above, the electrolyte layer may be prevented from being separated from the active material layer, positive ions (Li⁺), which are ion carriers, may easily pass through, and performance degradation depending on the total volume of the lithium secondary battery may be minimized.

The electrode or the electrode active material layer may have a thickness of 50 µm to 1,000 µm, specifically 50 µm to 500 µm, more specifically 50 µm to 300 µm after the hot rolling. When the thickness of the electrode is less than 50 µm, battery capacity may be reduced due to insufficient electrode loading thickness. In addition, when the thickness of the electrode is greater than 1,000 µm, an ion conduction path becomes longer, resulting in poor battery output performance, and the electrolyte solution inside the electrode slurry may not be uniformly cured as heat fails to reach the deep inside of the electrode slurry.

### (4) Heating electrode after hot rolling

The method for manufacturing an electrode according to the present invention may further include heating the electrode after the hot rolling. The electrolyte solution in the electrode may be further heat cured through the heating of the electrode.

The heating may include storing the electrode at a temperature of 40 °C to 80 °C for 10 minutes to 24 hours.

In this case, the temperature may be 40 °C to 80 °C, specifically 50 °C to 80 °C, more specifically 60 °C to 70 °C. It is desirable to control the storage temperature in the above numerical range in terms of curing the uncured electrolyte solution in the electrode slurry and also stabilizing the remaining components included in the electrode slurry.

In addition, the amount of time for storage may be 10 minutes to 24 hours, specifically 1 hour to 10 hours, more specifically 1 hour to 5 hours.

When the storage takes less than 10 minutes, the temperature inside the battery does not rise sufficiently to fail curing, and when the storage takes greater than 24 hours, certain additives in the battery may decompose.

The storing may correspond to storing an electrode roll wound with the current collector/electrode slurry/oxygen blocking member sequentially stacked in a high temperature chamber. Accordingly, volatilization of the electrolyte solution in the electrode may be minimized even when a vacuum is applied to the high temperature chamber. In addition, space in the chamber may be intensively used to improve electrode productivity.

A vacuum state may be formed in the high temperature chamber. In this case, oxygen in the chamber may be removed to complete the curing of the electrolyte solution in a less amount of time.

Meanwhile, after completing the curing of the electrolyte solution, the oxygen blocking member disposed on the electrode may be removed.

### <Lithium secondary battery>

In addition, the present invention provides a lithium secondary battery including the electrode described above.

Specifically, the lithium secondary battery may include an electrode assembly including two or more electrodes. The electrode assembly may be formed with a stack of two or more electrodes.

At least one of the two or more electrodes may be the electrode described above. Specifically, the two or more electrodes may all be the electrode described above. The electrode assembly may be formed with at least one positive electrode and at least one negative electrode each alternately stacked, and the positive electrode and the negative electrode may be the electrode described above. In the electrode assembly, the positive electrode active material layer of the positive electrode may face the negative electrode active material layer of the negative electrode, the positive electrode active material layer of the positive electrode may face the coating layer of the negative electrode, or the coating layer of the positive electrode may face the negative electrode active material layer of the negative electrode, or the coating layer of the positive electrode may face the coating layer of the negative electrode.

According to an embodiment of the present invention, the lithium secondary battery of the present invention may not include a separator disposed between the positive electrode and the negative electrode in typical lithium secondary batteries. Specifically, the electrolyte layer (coating layer) formed on a surface of the electrode of the present invention may be disposed between the positive electrode and the negative electrode, and may thus serve as a typical separator.

According to another embodiment of the present invention, the lithium secondary battery of the present invention may include a separator. In this case, the separator may be a separator that is immersed in the electrolyte solution and then cured (e.g., UV cured) to have the electrolyte solution cured in the pores. The separator is relatively thin in thickness compared to the electrode, and thus the curing of the electrolyte solution contained in the pores is done easily.

In addition, the lithium secondary battery of the present invention may not contain a liquid electrolyte solution injected when manufacturing typical lithium secondary batteries. Specifically, the electrolyte solution according to the present invention described above may be uniformly cured in the electrode, and may thus serve as a typical liquid electrolyte solution.

The lithium secondary battery of the present invention may be manufactured by placing the electrode assembly described above in a cylindrical battery case or a square battery case and sealing the case. The battery case may be the one commonly used in the art, and there is no limit to the external shape according to the purpose of batteries, for example, it may be a cylindrical shape, a square shape, a pouch shape, or a coin shape, but is not limited to thereto.

The lithium secondary battery according to an embodiment of the present invention may be used in a battery cell which is used as a power source for a small-sized device, and may also be preferably used as a unit cell for a medium- and large-sized battery module including a plurality of battery cells. Preferred examples of the medium-to-large devices include electric vehicles, hybrid electric vehicles, plug-in hybrid electric vehicles, and energy storage systems (ESS).

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

### Examples and Comparative Examples

### Example 1

### (1) Preparation of electrode slurry

In a solvent in which ethylene carbonate (EC) and propylene carbonate (PC) are present in a volume ratio of 5:5, triacrylate (ETPTA) and 2,2'-azobis (isobutyronitrile) (AIBN) were mixed in a weight ratio of 9.9 : 0.1, and lithium salt LiFSI was dissolved at 1.0 M to prepare an electrolyte solution. The triacrylate (ETPTA) and 2,2'-azobis(isobutyronitrile) (AIBN) each were included in an amount of 9.9 wt% and 0.1 wt% in the electrolyte solution.

Artificial graphite as a negative electrode active material and SupreC65 as a negative electrode conductive material were mixed in a weight ratio of 98:2 into the electrolyte solution to prepare a negative electrode slurry. In this case, the negative electrode slurry had a solid content of 75% and a viscosity of 6,000 cP at 25 °C.

In addition, Li(Ni_{0.8}Mn_{0.1}Co_{0.1})0₂ as a positive electrode active material and SuperC65 as a positive electrode conductive material were mixed at a weight ratio of 97:3 into the electrolyte solution to prepare a positive electrode slurry. In this case, the positive electrolyte had a solid content of 75% and a viscosity of 10,000 cP at 25 °C.

### (2) Preparation of electrode

A copper (Cu) metal thin film having a thickness of 10 µm was prepared as a negative electrode current collector, and the negative electrode slurry was applied on one side of the copper metal thin film. The applied negative electrode slurry was covered with a polypropylene film. Then, the negative electrode slurry covered with the polypropylene film (thickness: 100 µm) was hot rolled with a press roller having a surface temperature of 60 °C. Thereafter, the polypropylene film was removed from the electrode to finally prepare a negative electrode having a total thickness of 85 µm in which a negative electrode active material layer and an electrolyte layer were sequentially stacked on the negative electrode current collector.

An aluminum (Al) metal thin film having a thickness of 15 µm was prepared as a positive electrode current collector, and the positive electrode slurry was applied on one side of the aluminum metal thin film. The applied positive electrode slurry was covered with a polypropylene film. Then, the positive electrode slurry covered with the polypropylene film was hot rolled using a press roller having a surface temperature of 60 °C. Thereafter, the polypropylene film was removed from the electrode to finally prepare a positive electrode having a total thickness of 65 µm in which a positive electrode active material layer and an electrolyte layer were sequentially stacked on the positive electrode current collector.

### (3) Manufacture of lithium secondary battery

An electrode assembly in the form of a Bi-cell was manufactured by disposing the prepared positive electrode and negative electrode to be in contact with each other in the order of negative electrode/positive electrode/negative electrode.

The electrode assembly was stored in a battery case and sealed to manufacture a lithium secondary battery.

### Example 2

An electrode slurry was prepared in the same manner as in Example 1.

An electrode was manufactured in the same manner as in Example 1, except that an HDPE film was used instead of a polypropylene film.

A lithium secondary battery was manufactured in the same manner as in Example 1, except that the electrode prepared above was used.

### Example 3

An electrode slurry was prepared in the same manner as in Example 1.

An electrode was prepared in the same manner as in Example 1, except that the electrode was stored for 5 hours in a chamber having an internal temperature of 70 ° C before removing the polypropylene film from the electrode after hot rolling using a press roller.

A lithium secondary battery was manufactured in the same manner as in Example 1, except that the electrode prepared above was used.

### Comparative Example 1

An electrode slurry was prepared in the same manner as in Example 1.

An electrode was prepared in the same manner as in Example 1, except that the electrode slurry was hot rolled using a press roller without covering the polypropylene film.

A lithium secondary battery was manufactured in the same manner as in Example 1, except that the electrode prepared above was used.

### Comparative Example 2

An electrode slurry was prepared in the same manner as in Example 1.

An electrode was prepared in the same manner as in Example 1, except that the electrode slurry was not hot rolled using a press roller and the polypropylene film was irradiated with ultraviolet rays having a wavelength of 556 nm for 1 minute.

A lithium secondary battery was manufactured in the same manner as in Example 1, except that the electrode prepared above was used.

### Comparative Example 3

### (1) Preparation of electrode slurry

Artificial graphite as a negative electrode active material, SuperC65 as a negative electrode conductive material, and SBR-CMC as a negative electrode binder were mixed in a weight ratio of 95:1.5:3.5, and water was used as a solvent to prepare a negative electrode slurry. The negative electrode slurry has a solid content of 50%.

In addition, Li(Ni_{0.8}Mn_{0.1}Co_{0.1})0₂ as a positive electrode active material, SuperC65 as a positive electrode conductive material, and PVdF as a positive electrode binder were mixed in a weight ratio of 96:1.5:2.5, and NMP was used as a solvent to prepare a positive electrode slurry. The positive electrode slurry had a solid content of 75%.

### (2) Preparation of electrode

A copper (Cu) metal thin film having a thickness of 10 µm was prepared as a negative electrode current collector, and the negative electrode slurry was applied onto one side of the copper metal thin film. The negative electrode slurry was then dried and rolled to form a negative electrode active material layer on the negative electrode current collector. The electrolyte solution prepared in Example 1 was applied on the negative electrode active material layer. The applied electrolyte solution was covered with a polypropylene film. Then, the electrolyte solution covered with the polypropylene film was hot rolled using a press roller having a surface temperature of 60 °C. The hot rolled electrode was stored for 5 hours in a chamber having an internal temperature of 70 °C. Thereafter, the polypropylene film was removed from the electrode to finally prepare a negative electrode having a total thickness of 85 µm in which a negative electrode active material layer and an electrolyte layer were sequentially stacked on the negative electrode current collector.

An aluminum (Al) metal thin film having a thickness of 15 µm was prepared as a positive electrode current collector, and the positive electrode slurry was applied on one side of the aluminum metal thin film. The positive electrode slurry was then dried and rolled to form a positive electrode active material layer on the positive electrode current collector. The electrolyte solution prepared in Example 1 was applied on the positive electrode active material layer. The applied electrolyte solution was covered with a polypropylene film. Then, the electrolyte solution covered with the polypropylene film was hot rolled using a press roller having a surface temperature of 60 °C. The hot rolled electrode was stored for 5 hours in a chamber having an internal temperature of 70 °C. Thereafter, the polypropylene film was removed from the electrode to finally prepare a positive electrode having a total thickness of 65 µm in which a positive electrode active material layer and an electrolyte layer were sequentially stacked on the positive electrode current collector.

### (3) Manufacture of lithium secondary battery

A lithium secondary battery was manufactured in the same manner as Example 1, except that the electrode assembly was prepared by disposing the prepared positive electrode and negative electrode to be in contact with each other.

### Comparative Example 4

### (1) Manufacture of positive electrode

Li(Ni_{0.8}Mn_{0.1}Co_{0.1})0₂ as a positive electrode active material, SuperC65 as a positive electrode conductive material, and PVdF as a positive electrode binder were mixed in a weight ratio of 94:3:3, and NMP was used as a solvent to prepare a positive electrode slurry. The positive electrode slurry had a solid content of 50%. The positive electrode slurry was applied on an aluminum (Al) thin film, which is a positive electrode current collector, and dried and roll pressed to prepare a positive electrode.

### (2) Manufacture of negative electrode

Artificial graphite as a negative electrode active material, SuperC65 as a negative electrode conductive material, and SBR-CMC as a negative electrode binder were mixed in a weight ratio of 96:2:2, and water was used as a solvent to prepare a negative electrode slurry. The negative electrode slurry had a solid content of 80%. The negative electrode slurry was applied on a copper (Cu) thin film, which is a negative electrode current collector, and dried and roll pressed to prepare a negative electrode.

### (3) Preparation of electrode assembly

An electrode assembly was prepared by sequentially stacking the positive electrode, separator, and negative electrode prepared above. The separator has a three-layer stack structure of polypropylene/polyethylene/polypropylene.

### (4) Manufacturing of lithium secondary battery

The electrode assembly was inserted into a pouch-type battery case, and the electrolyte solution prepared in Example 1 was injected. The battery case was sealed under vacuum. The sealing was performed by pressing a sealing portion of the pouch at 140 °C for 2 seconds. After the sealing of the battery case, the case was left at room temperature for 3 days and heated at 70 °C for 5 hours in a heating chamber to prepare a lithium secondary battery containing a thermally polymerized gel polymer electrolyte.

**[Table 1]**

| | Inclusion of electroly te solution in electrode slurry | Presence of binder and NMP solvent | Oxygen blocking member | Using heating roller | Storing in high temperatu re chamber |
|---|---|---|---|---|---|
| Example 1 | O | X | PP | O | X |
| Example 2 | O | X | HDPE | O | X |
| Example 3 | O | X | PP | O | O |
| Comparative Example 1 | O | X | Not used | O | X |
| Comparative Example 2 | O | X | PP | X (UV curing) | X |
| Comparative Example 3 | X | O | PP | O | O |
| Comparative Example 4 | X | O | X | X | O |

### Experimental Example 1 - Evaluation on adhesion of electrode active material layer

For the positive electrodes prepared in Examples 1 to 3 and Comparative Examples 1 to 4, 180° peel strength of the active material layer was measured.

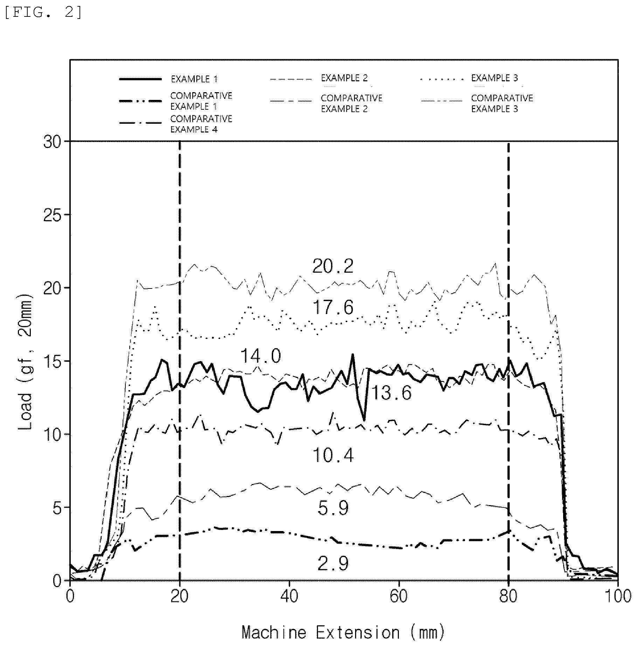

Specifically, the positive electrodes each prepared in Examples 1 to 3 and Comparative Examples 1 to 4 were cut to have a width of 20 mm. Thereafter, an average value of the 180° peel strength in the 20 to 80 mm displacement range was measured by peeling the positive electrode active material layer from the positive electrode current collector, using UTM equipment. The measurement results are shown in FIG. 2 and Table 2 below.

FIG. 2 is a graph measuring the adhesion of an active material layer to a current collector in positive electrodes each prepared in Examples 1 to 3 and Comparative Examples 1 to 4.

### Experimental Example 2 - Evaluation on rigidity of electrode

The rigidity of the positive electrodes and negative electrodes each prepared in Examples 1 to 3 and Comparative Examples 1 to 4 was measured.

Specifically, for the positive electrodes and negative electrodes each prepared in Examples 1 to 3 and Comparative Examples 1 to 4, the electrodes were fastened to an aluminum (Al) jig having a hole of 5 cm in diameter, and then the electrodes were pressed with a metal rod of 2 cm in diameter, using a UTM device. The measurement results are shown in Table 2 below.

### Experimental Example 3 - Electrolyte solution leakage upon manufacturing of lithium secondary battery

In the process of manufacturing the lithium secondary batteries in Examples 1 to 3 and Comparative Examples 1 to 4, whether the electrolyte solution leaked from the electrode assembly was observed and is shown in Table 2 below.
O: Electrolyte solution leaked
X: No electrolyte solution leakage

### Experimental Example 4: Evaluation on capacity of lithium secondary battery

The capacities of the lithium secondary batteries manufactured in Examples 1 to 3 and Comparative Examples 1 to 4 were measured. Specifically, the lithium secondary batteries were fastened to an aluminum jig using PNE solution charge/discharge equipment, and then charge/discharge was performed according to the following conditions to measure battery capacity. The measurement results are shown in Table 2 below.

Charging conditions: Charge at a rate of 0.2 C in CC (constant current)/CV (constant voltage) mode, cut-off at 4.2 V and 0.05 C.

Discharging conditions: Discharge at a rate of 0.2 C in CC mode, cut-off at 3.0 V

### Experimental Example 5 - Evaluation on lifespan of lithium secondary battery

The lithium secondary batteries manufactured in Examples 1 to 3 and Comparative Examples 1 to 4 were charged/discharged at 45 °C according to the following conditions, and the capacity retention according to the number of cycles was measured.

Charging conditions: Charge at a rate of 0.33 C in CC (constant current)/CV (constant voltage) mode, cut-off at 4.2 V and 0.05 C.

Discharging conditions: Discharge at a rate of 0.33 C in CC mode, cut-off at 3.0 V

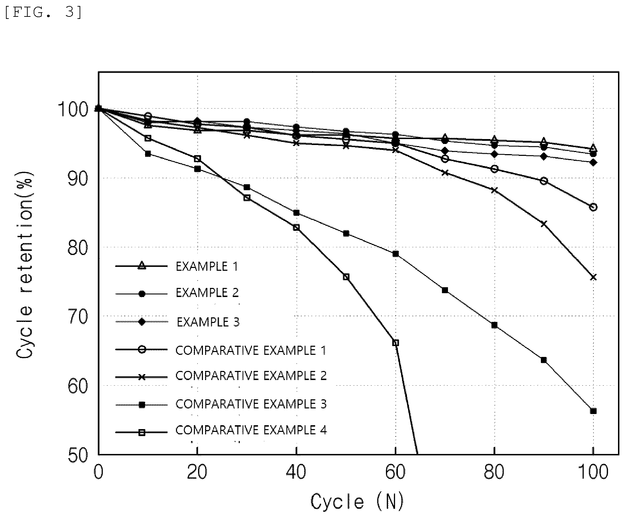

In this case, the capacity retention rate of the batteries was measured using IL-2C-525S from JEIO TECH. The measurement results are shown in FIG. 3 and Table 3 below.

FIG. 3 is a graph showing capacity retention according to the number of cycles after lithium secondary batteries manufactured in Examples 1 to 3 and Comparative Examples 1 to 4 are driven at 45 °C.

**[Table 2]**

| | Electrode adhesion (gf/20mm) | Electrode rigidity of negative electrode (kPa) | Electrode rigidity of positive electrode (kPa) | Electroly te leakage upon cell assemblin g | Battery capacity (mAh) |
|---|---|---|---|---|---|
| Example 1 | 13.6 | 2.15 | 2.75 | X | 102.6 |
| Example 2 | 14 | 2.15 | 2.81 | X | 101.9 |
| Example 3 | 17.6 | 2.63 | 3.25 | X | 101.2 |
| Comparative Example 1 | 2.9 | 0.35 | 0.52 | O | 108.3 |
| Comparative Example 2 | 5.9 | 0.61 | 0.79 | O | 105.6 |
| Comparative Example 3 | 20.2 | 3.25 | 4.78 | X | 58.9 |
| Comparative Example 4 | 10.4 | 1.20 | 1.87 | X | 75.8 |

**[Table 3]**

| | Battery capacity retention (%) | | | | | |
|---|---|---|---|---|---|---|
| | 0 cycle | 20 cycle | 40 cycle | 60 cycle | 80 cycle | 100 cycle |
| Example 1 | 100 | 97.0 | 95.9 | 95.4 | 95.0 | 93.9 |
| Example 2 | 100 | 97.9 | 97.0 | 95.9 | 94.5 | 93.5 |
| Example 3 | 100 | 97.8 | 96.5 | 94.7 | 93.2 | 92.1 |
| Comparative Example 1 | 100 | 97.3 | 94.9 | 93.8 | 88.0 | 75.6 |
| Comparative Example 2 | 100 | 97.5 | 95.9 | 94.8 | 91.0 | 85.6 |
| Comparative Example 3 | 100 | 92.5 | 82.9 | 65.8 | - | - |
| Comparative Example 4 | 100 | 91.2 | 84.8 | 78.8 | 68.7 | 56.4 |

As shown in FIGS. 2 and 3, and Tables 2 and 3, it is seen that the lithium secondary batteries of Examples 1 to 3 including an electrode active material and a gel polymer electrolyte in an electrode active material layer, and satisfying the electrode rigidity range of the electrode active material layer have no electrolyte solution leakage, excellent capacity manifestation, and significantly excellent lifespan performance, compared to Comparative Examples 1 to 4.

As shown in FIG. 2 and Table 2, it is seen that Examples 1 to 3 in which hot rolling was performed after disposing an oxygen blocking member had significantly excellent adhesion of the electrode active material layer, compared to Comparative Example 1 with no used of an oxygen blocking member and Comparative Example 2 in which UV curing was performed instead of heat curing through hot rolling. Among Examples 1 to 3, it is seen that Example 3 in which an electrolyte solution was additionally heat cured in a high temperature chamber had greater adhesion of the electrode active material layer than Examples 1 and 2.

In Comparative Example 1 in which an oxygen blocking member was not used, an electrode slurry was exposed to oxygen and thus an electrolyte solution in the electrode was not cured even after hot rolling. A polymer in the electrolyte solution was not cured and thus failed to serve as a binder, and accordingly, Comparative Example 1 had significantly reduced adhesion of the electrode active material layer, compared to Examples 1 to 3.

In Comparative Example 2 in which UV curing was performed instead of hot rolling, only the electrolyte solution disposed in an upper portion of the electrode active material layer was cured, and the electrolyte solution disposed in a lower portion of the electrode active material layer was not cured. Accordingly, the active material layer was separated at the border between the upper layer and the lower layer of the electrode active material layer, and thus Comparative Example 2 had significantly reduced adhesion of the electrode active material layer, compared to Examples 1 to 3.

Meanwhile, as shown in Table 2, it is seen that Examples 1 to 3 in which hot rolling was performed after disposing an oxygen blocking member had significantly excellent rigidity of the electrode active material layer, compared to Comparative Example 1 with no used of an oxygen blocking member and Comparative Example 2 in which UV curing was performed instead of heat curing through hot rolling. Among Examples 1 to 3, it is seen that Example 3 in which an electrolyte solution was additionally heat cured in a high temperature chamber had greater rigidity of the electrode active material layer than Examples 1 and 2.

In Comparative Example 1 in which an oxygen blocking member was not used, an electrode slurry was exposed to oxygen and thus an electrolyte solution in the electrode was not cured even after hot rolling. Accordingly, the electrode rigidity was significantly reduced compared to Examples 1 to 3.

In Comparative Example 2 in which UV curing was performed instead of hot rolling, only the electrolyte solution disposed in a surface of the electrode was cured, and the electrolyte solution disposed inside the electrode was not cured. Accordingly, the electrode rigidity was significantly reduced compared to Examples 1 to 3.

Meanwhile, as shown in Table 2, it is seen that in Comparative Example 1 in which an oxygen blocking member was not used and Comparative Example 2 in which UV curing was performed instead of heat curing through hot rolling, the electrolyte solution in the electrode was not sufficiently cured, and thus the electrolyte solution leaked out of the electrode assembly upon cell assembling.

Meanwhile, as shown in FIG. 3 and Tables 2 and 3, it is seen that in Comparative Example 3 in which a general electrode was impregnated with an electrolyte solution and then heat cured, the electrolyte solution was not impregnated to the inside of the electrode, and thus the heat cured electrolyte was not present inside the electrode, and accordingly, Comparative Example 3 had significantly reduced battery capacity and battery capacity retention compared to Examples 1 to 3.

In addition, in Comparative Example 4, unreacted monomers were present in the gel polymer electrolyte, or impregnation of the gel polymer electrolyte into the electrode was not sufficient, resulting in low electrode rigidity to show low capacity and reduced lifespan performance.

### [Description of Reference Numerals]

10: Electrode
110: Electrode current collector
120: Electrode active material layer
130: Coating layer (or electrolyte layer)

## Claims

1. An electrode comprising:
an electrode current collector; and
an electrode active material layer disposed on at least one side of the electrode current collector,
wherein the electrode active material layer comprises an electrode active material and a gel polymer electrolyte, and
the electrode has a rigidity of 2 kPa to 4 kPa.

2. The electrode of claim 1, wherein the gel polymer electrolyte is impregnated in the electrode active material layer.

3. The electrode of claim 1, wherein the electrode is a positive electrode,
the electrode active material is a positive electrode active material, and
the positive electrode active material comprises a lithium nickel cobalt-based composite oxide represented by Formula 1 below:
[Formula 1] Li₁₊ₓ(NiₐCo_{b}Mn_{c}M_{d})O₂
wherein in Formula 1 above,
M is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
1+x, a, b, c, and d are each a molar ratio of independent elements, and satisfy -0.2≤x≤0.2, 0.60≤a<1, 0<b≤0.30, 0<c≤0.30, 0≤d≤0.10, a+b+c+d=1.

4. The electrode of claim 1, wherein the electrode is a negative electrode,
the electrode active material is a negative electrode active material, and
the negative electrode active material is a carbon-based material.

5. The electrode of claim 1, wherein the gel polymer electrolyte is a cured product of an electrolyte solution containing a crosslinkable material, a lithium salt, and an organic solvent, and
the crosslinkable material comprises at least one selected from a crosslinkable monomer and a crosslinkable oligomer.

6. The electrode of claim 1, wherein the electrode active material layer further comprises a coating layer disposed on a side opposite to a side facing the electrode current collector, and
the coating layer comprises a gel polymer electrolyte.

7. A method for manufacturing an electrode, the method comprising:
applying an electrode slurry containing an electrolyte solution on an electrode current collector;
disposing an oxygen blocking member on the applied electrode slurry; and
hot rolling the electrode slurry covered with the oxygen blocking member,
wherein the electrolyte solution is heat cured through the hot rolling.

8. The method of claim 7, wherein the hot rolling comprises rolling the electrode slurry with a press roller having a surface temperature of 30 °C to 80 °C.

9. The method of claim 7, wherein the electrode has a thickness of 50 µm to 1,000 µm after the hot rolling.

10. The method of claim 7, wherein the oxygen blocking member comprises a material having flexibility.

11. The method of claim 10, wherein the oxygen blocking member comprises at least one selected from the group consisting of polypropylene (PP) and high density polyethylene (HDPE).

12. The method of claim 7, wherein the method further comprises heating the electrode after the hot rolling,
wherein the electrolyte solution in the electrode is additionally heat cured through the heating.

13. The method of claim 12, wherein the heating comprises storing the electrode at a temperature of 40 °C to 80 °C for 10 minutes to 24 hours.

14. The method of claim 7, wherein the electrode slurry is prepared by mixing an active material and a conductive material with the electrolyte solution.

15. The method of claim 7, wherein the electrode slurry does not comprise binder and N-methyl-2-pyrrolidone (NMP).

16. The method of claim 7, wherein the electrolyte solution comprises at least one of a monomer and an oligomer in an amount of 4 wt% to 40 wt%.

17. The method of claim 16, wherein the monomer comprises at least one selected from the group consisting of ethyleneglycol diacrylate, triethylene glycol diacrylate, ethoxylated trimethylolpropane triacrylate (ETPTA), bisphenol A ethoxylated dimethacrylate, acrylic acid, carboxyethyl acrylate, methyl cyanoacrylate, ethyl cyanoacrylate, ethyl cyano ethoxyacrylate, cyano acrylic acid, hydroxyethyl methacrylate, and hydroxypropyl acrylate.

18. The method of claim 16, wherein the oligomer comprises at least one selected from the group consisting of a polyether-based oligomer, a polycarbonate-based oligomer, an acrylate-based oligomer, a polysiloxane-based oligomer, a phosphazene-based oligomer, a polyethylene-based oligomer, a urethane-based oligomer, an epoxy-based oligomer, a fluorine-based oligomer, polyethylene oxide, polyester sulfide, polyvinyl alcohol, and polyvinylidene fluoride.

19. A lithium secondary battery comprising the electrode according to claim 1.
